# EUROPEAN PATENT SPECIFICATION

(11) **EP 3 604 948 B1**
(45) Date of publication and mention of the grant of the patent: **25.01.2023**
(21) Application number: 18908881.8
(22) Date of filing: 27.04.2018
(51) Int. Cl.: F24F 11/00, F24F 11/64, F24F 11/86, F24F 110/20, F24F 110/22

(54) **AIR CONDITIONER, CONTROL METHOD THEREFOR AND COMPUTER READABLE STORAGE MEDIUM**
KLIMAANLAGE, STEUERUNGSVERFAHREN DAFÜR UND COMPUTERLESBARES SPEICHERMEDIUM
CLIMATISEUR, PROCÉDÉ DE COMMANDE ASSOCIÉ ET SUPPORT D'INFORMATIONS LISIBLE PAR ORDINATEUR

(30) Priority: 09.03.2018 CN 201810199869
(43) Date of publication of application: 05.02.2020
(73) Proprietor: GD Midea Air-Conditioning Equipment Co., Ltd., Foshan, Guangdong 528311 (CN); Midea Group Co., Ltd., Foshan, Guangdong 528311 (CN)
(72) Inventor: MA, Lie, Foshan, Guangdong 528311 (CN); JI, Ansheng, Foshan, Guangdong 528311 (CN); ZHENG, Xiong, Foshan, Guangdong 528311 (CN); QI, Tao, Foshan, Guangdong 528311 (CN)
(74) Representative: RGTH
(86) International application number: PCT/CN2018/084902
(87) International publication number: WO 2019/169717

(56) References cited:
- EP-A1- 1 443 279
- EP-A2- 1 091 178
- WO-A1-2017/179192
- CN-A- 105 241 017
- CN-A- 105 241 017
- CN-A- 105 241 017
- CN-A- 105 546 770
- CN-A- 106 322 677
- CN-A- 107 621 053
- JP-A- H06 307 705

## Description

### TECHNICAL FIELD

The present disclosure relates to the technical field of air conditioners, in particular to an air conditioner, a method for controlling an air conditioner and a computer readable storage medium.

### BACKGROUND

With the improvement of domestic living standards, air conditioning has become an essential electrical appliance in life.

People needs the air conditioner for refrigeration under the weather with a high temperature. In order to rapidly decrease the indoor temperature, the operating frequency of the AC compressor is typically high. As such, when the air out-flowing volume of the air conditioner is small, the cold air from the air conditioner tends to condense into water droplets with external water vapor, leading to water condensation outside the air conditioner, and slowing down decrease rate of the indoor temperature. Namely, the refrigeration of the air conditioner is undeveloped, when the air out-flowing volume of the air conditioner is small.
CN 105241017 A discloses a frequency control method of an air conditioner compressor, which includes: judging whether the air conditioner is in a low air volume state; when the air conditioner is in a low air volume state, obtaining the indoor environment temperature of the air conditioner and obtaining the indoor environmental humidity of the air conditioner;

### SUMMARY

The present invention mainly aims to provide an air conditioner, a method for controlling an air conditioner and a computer readable storage medium, to solve the problem of undeveloped refrigeration of the air conditioner when the air out-flowing volume of the air conditioner is relatively small.

In order to achieve the aforementioned object, the present invention provides a control method for an air conditioner according to claim 1, which includes the following operations:
detecting an indoor humidity in real time or regularly of a space where the air conditioner is located, in response to a determination that the air conditioner is in a refrigeration mode and an air out-flowing volume of the air conditioner is less than a preset air out-flowing volume;
adjusting an operating frequency of a compressor of the air conditioner according to the indoor humidity, in which the indoor humidity is proportional to the operating frequency.

The operation of adjusting an operating frequency of a compressor of the air conditioner according to the indoor humidity, includes:
determining a state of the space where the air conditioner is located according to the indoor humidity, in which the state includes an open state and a closed state;
determining the operating frequency of the compressor according to the state of the space;
controlling the compressor to operate according to the operating frequency.

Optionally, the operation of determining a state of the space where the air conditioner is located according to the indoor humidity, includes:
determining the state of the space according to a ratio between a current indoor humidity and a previous indoor humidity, in which, in response to a determination that the indoor humidity ratio is in a first ratio range, the space is determined to be in the open state; in response to a determination that the indoor humidity ratio is in a second ratio range, the space is determined to be in the closed state, in which the first ratio range is larger than the second ratio range.

Optionally, the operation of determining the operating frequency of the compressor according to the state of the space, includes:
acquiring a mapping between the operating frequency of the compressor and an operating duration of the compressor, in response to the open state;
determining the operating frequency according to the mapping and the operating duration.

Optionally, the operating frequency of the compressor is inversely proportional to the operating duration of the compressor, in response to the open state.

Optionally, the operation of determining the operating frequency of the compressor according to the state of the space, includes:
determining a threshold condensation frequency corresponding to the indoor humidity, in response to the closed state;
calculating a humidity ratio between a current indoor humidity and a previous indoor humidity;
calculating a change rate of the humidity ratio according to a currently calculated humidity ratio and a previously calculated humidity ratio;
determining the operating frequency according to the threshold condensation frequency and the change rate of the humidity ratio.

Optionally, the operation of determining a state of the space where the air conditioner is located according to the indoor humidity, includes:
acquiring an outdoor humidity and calculating a difference between the outdoor humidity and the indoor humidity;
determining the state of the space according to the humidity difference and a preset humidity difference, in which in response to a determination that the humidity difference is less than or equal to the preset humidity difference, the state is determined to be in the open state, and in response to a determination that the humidity difference is greater than the preset humidity difference, the state is determined to be in a closed state.

Optionally, the operation of determining a state of the space where the air conditioner is located according to the indoor humidity, includes:
acquiring the detecting time interval of the indoor humidity, and calculating an indoor humidity difference between a currently detected indoor humidity and a previously detected indoor humidity;
calculating a humidity change rate according to the detecting time interval and the indoor humidity difference;
determining the state of the space according to the humidity change rate, in which in response to a determination that the humidity change rate is less than or equal to a preset threshold value, the space is determined to be in an open state; in response to a determination that the humidity change rate is greater than the preset threshold value, the space is determined to be in a closed state.

Optionally, after the operation of detecting an indoor humidity, the method further includes:
judging whether the indoor humidity is within a preset humidity range;
in response to a determination that the indoor humidity is within the preset humidity range, executing the operation of adjusting an operating frequency of a compressor of the air conditioner according to the indoor humidity.

Optionally, after the operation of detecting an indoor humidity, the method further includes:
judging whether the indoor humidity is less than a preset humidity;
in response to a determination that the indoor humidity is larger or equal to the preset humidity, executing the operation of adjusting an operating frequency of a compressor of the air conditioner according to the indoor humidity.

Optionally, the control method further includes:
in response to a determination that an air out-flowing temperature of the air conditioner is less than a preset air out-flowing temperature, and an air out-flowing volume of the air conditioner is less than a preset air out-flowing volume, executing the operation of detecting an indoor humidity in real time or regularly of a space where the air conditioner is located.

Optionally, the control method further includes:
in response to a determination that the air conditioner is in a refrigeration mode and in a breezeless mode, executing the operation of detecting an indoor humidity in real time or regularly of a space where the air conditioner is located.

Optionally, the control method further includes:
in response to a determination that the air conditioner is in a refrigeration mode and in a breeze mode, executing the operation of detecting an indoor humidity in real time or regularly of a space where the air conditioner is located.

In order to achieve the aforementioned object, the present invention further proposes an air conditioner according to claim 13, which includes a processor, a memory, and a control program of the air conditioner stored on the memory and executable on the processor, and when executed by the processor, the control program of the air conditioner implements the operations of the control method for the air conditioner described above.

In order to achieve the aforementioned object, the present invention further proposes a computer readable storage medium according to claim 14 which stores a program for controlling an air conditioner, and when the control program of the air conditioner is executed by a processor, the control program implements operations of the control method for the air conditioner as described above.

According to the air conditioner, the control method thereof and the computer readable storage medium proposed by the present invention, when the air conditioner is in a refrigeration mode and the air out-flowing volume of the air conditioner is less than the preset air out-flowing volume, the indoor humidity of the space where the air conditioner is located is detected in real time or regularly. And then the operating frequency of the compressor is adjusted according to the indoor humidity, so that the compressor can reasonably adjust the operating frequency according to the external humidity. The condensation phenomenon causes poor refrigeration effect of the air conditioner when the air out-flowing volume is small is avoided, and the refrigeration effect of the air conditioner when the air out-flowing volume is low is ensured.

### BRIEF DESCRIPTION OF THE DRAWINGS

Fig. 1 is a schematic diagram of a hardware structure of an air conditioner according to an embodiment of the present invention;
Fig. 2 is a first flow chart of an embodiment of a method for controlling an air conditioner according to the known prior art;
Fig. 3 is a second flow chart of an embodiment of a method for controlling an air conditioner of the present invention;
Fig. 4 is a third flow chart of an embodiment of a method for controlling an air conditioner of the present invention;
Fig. 5 is a fourth flow chart of an embodiment of a method for controlling an air conditioner of the present invention;
Fig. 6 is a fifth flow chart of an embodiment of a method for controlling an air conditioner of the present invention;
Fig. 7 is a sixth flow chart of an embodiment of a method for controlling an air conditioner of the present invention;
Fig. 8 is a seventh flow chart of an embodiment of a method for controlling an air conditioner of the present invention;

The implementation, functional characteristics and advantages of the present invention will be further described with reference to the attached drawings in combination with embodiments.

### DETAILED DESCRIPTION OF THE EMBODIMENTS

It should be understood that the specific embodiments described herein are only for illustrative purpose and are not intended to limit the present invention.

The technical solution regarding the embodiments of the present invention is by detecting an indoor humidity in real time or regularly of a space where the air conditioner is located, in response to a determination that the air conditioner is in a refrigeration mode and an air out-flowing volume of the air conditioner is less than a preset air out-flowing volume; adjusting an operating frequency of a compressor of the air conditioner according to the indoor humidity, in which the indoor humidity is proportional to the operating frequency.

In the prior art, when the air out-flowing volume of the air conditioner is small, the cold air from the air conditioner tends to condense into water droplets with external water vapor, leading to water condensation outside the air conditioner, and slowing down decrease rate of the indoor temperature. Namely, the refrigeration of the air conditioner is undeveloped, when the air out-flowing volume of the air conditioner is relatively small.

The present invention proposes a technical solution that the compressor can reasonably adjust the operating frequency according to external humidity, to overcome a undeveloped refrigeration effect of the air conditioner due to water condensation under a small air volume, and ensure the refrigeration effect when the air out-flowing volume is low.

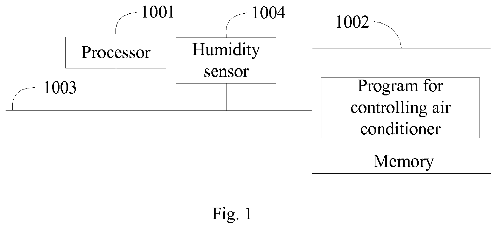

As an embodiment, the air conditioner can referred to as shown in Fig. 1.

The embodiments of the present invention relates to an air conditioner, which includes a processor 1001, such as a CPU, a memory 1002, a communication bus 1003, and a humidity sensor 1004. The communication bus 1003 is configured to implement connection and communication between these components, and the humidity sensor 1004 is configured to detect the indoor humidity of the space where the air conditioner is located.

The memory 1002 may be a high-speed RAM memory or a non-volatile memory such as a disk memory. As shown in Fig. 1, the memory 1003 as a computer storage medium may include a control program of an air conditioner; the processor 1001 can be configured to call the control program of the air conditioner stored in the memory 1002 and execute the following operations:
detecting an indoor humidity in real time or regularly of a space where the air conditioner is located, in response to a determination that the air conditioner is in a refrigeration mode and an air out-flowing volume of the air conditioner is less than a preset air out-flowing volume;
adjusting an operating frequency of a compressor of the air conditioner according to the indoor humidity, in which the indoor humidity is proportional to the operating frequency.

Further, the processor 1001 may be configured to call a control program of the air conditioner stored in the memory 1002 and execute the following operations:
determining a state of the space where the air conditioner is located according to the indoor humidity, in which the state includes an open state and a closed state;
determining the operating frequency of the compressor according to the state of the space;
controlling the compressor to operate according to the operating frequency.

Further, the processor 1001 may be configured to call a control program of the air conditioner stored in the memory 1002 and execute the following operations:
determining the state of the space according to a ratio between a current indoor humidity and a previous indoor humidity, in which in response to a determination that the indoor humidity ratio is in a first ratio range, the space is determined to be in the open state; in response to a determination that the indoor humidity ratio is in a second ratio range, the space is determined to be in the closed state, in which the first ratio range is larger than the second ratio range.

Further, the processor 1001 may be configured to call a control program of the air conditioner stored in the memory 1002 and execute the following operations:
acquiring a mapping between the operating frequency of the compressor and an operating duration of the compressor, in response to the open state;
determining the operating frequency according to the mapping and the operating duration.

Further, the processor 1001 may be configured to call a control program of the air conditioner stored in the memory 1002 and execute the following operations:
determining a threshold condensation frequency corresponding to the indoor humidity, in response to the closed state;
calculating a humidity ratio between a current indoor humidity and a previous indoor humidity;
calculating a change rate of the humidity ratio according to a currently calculated humidity ratio and a previously calculated humidity ratio;
determining the operating frequency according to the threshold condensation frequency and the change rate of the humidity ratio.

Further, the processor 1001 may be configured to call a control program of the air conditioner stored in the memory 1002 and execute the following operations:
acquiring an outdoor humidity and calculating a difference between the outdoor humidity and the indoor humidity;
determining the state of the space according to the humidity difference and a preset humidity difference, in which in response to a determination that the humidity difference is less than or equal to the preset humidity difference, the state is determined to be in the open state, and in response to a determination that the humidity difference is greater than the preset humidity difference, the state is determined to be in a closed state.

Further, the processor 1001 may be configured to call a control program of the air conditioner stored in the memory 1002 and execute the following operations:
acquiring the detecting time interval of the indoor humidity, and calculating an indoor humidity difference between a currently detected indoor humidity and a previously detected indoor humidity;
calculating a humidity change rate according to the detecting time interval and the indoor humidity difference;
determining the state of the space according to the humidity change rate, in which in response to a determination that the humidity change rate is less than or equal to a preset threshold value, the space is determined to be in an open state; in response to a determination that the humidity change rate is greater than the preset threshold value, the space is determined to be in a closed state.

Further, the processor 1001 may be configured to call a control program of the air conditioner stored in the memory 1002 and execute the following operations:
judging whether the indoor humidity is within a preset humidity range;
in response to a determination that the indoor humidity is within the preset humidity range, executing the operation of adjusting an operating frequency of a compressor of the air conditioner according to the indoor humidity.

According to the aforementioned technical solutions regarding the present embodiments, the indoor humidity is detected in real time or regularly of a space where the air conditioner is located, when the air conditioner is in a refrigeration mode and an air out-flowing volume of the air conditioner is less than a preset air out-flowing volume, andthe operating frequency is adjusted of a compressor of the air conditioner according to the indoor humidity. As such, the compressor can reasonably adjust the operating frequency according to external humidity, to overcome a undeveloped refrigeration effect of the air conditioner due to water condensation under a small air volume, and ensure the refrigeration effect when the air out-flowing volume is relatively low.

Based on the above hardware structure, embodiments of the control method of the air conditioner of the present invention are proposed.

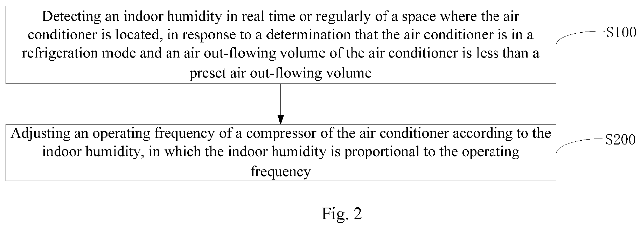

Referring to Fig. 2, which is a first embodiment of the method controlling the air conditioner according to the known prior art, which includes the following operations:

Operation S100, detecting an indoor humidity in real time or regularly of a space where the air conditioner is located, in response to a determination that the air conditioner is in a refrigeration mode and an air out-flowing volume of the air conditioner is less than a preset air out-flowing volume;

In the present embodiment, the air conditioner refers to an air conditioner with a frequency conversion compressor, which has a humidity sensor for the air conditioner to detect the humidity of the space where the air conditioner is located.

When the air conditioner is refrigerating, air out-flowing temperature is relatively low, typically between 13°C to 15°C. In occasion that the air outlet air volume of the air conditioner is relatively low (for example, the air conditioner is in a breezeless mode or a breeze mode), the water vapor in the space where the air conditioner is located can fully contact with the air conditioner, so that the water vapor discharge energy and lead to water condensation of the air conditioner. As condensation is exothermic, the indoor temperature decrease rate would drop and even reverse, resulting in poor refrigeration of the air conditioner and undesired user experience. As such, the air conditioner will collect its operating parameters (the operating parameters can be the air out-flowing volume and the air output temperature), so as to control the operating frequency of the compressor of the air conditioner according to its operating parameters. The output of the refrigerating air is reasonably controlled, to prevent the refrigerating air from fully contacting with the indoor water vapor.

In the present embodiment, when the air conditioner is in the refrigeration mode and the air out-flowing volume of the air conditioner is less than the preset air out-flowing volume, the air conditioner detects the humidity of the space where the air conditioner is located in real time or regularly, i.e. detects the indoor humidity.

The present embodiment is not limited to detecting the indoor humidity only when the air conditioner is in the refrigeration mode and its air output is less than the preset air output.The indoor humidity can be detected when the air out-flowing temperature of the air conditioner is less than a preset air out-flowing temperature and its air output is less than a preset air output. The preset temperature is set taking the basis that the air conditioner is in the refrigeration mode and the air conditioner needs to rapidly decrease the indoor temperature. Namely, the preset temperature can be for example, 13°C to15°C. The preset air outlet volume is set taking the basis that the current air outlet volume of the air conditioner enables external water vapor and the cold air from the air conditioner to condense into water drops. The present air outlet volume can be any value satisfying the aforementioned requirement. In addition, the air conditioner can directly judge whether the operation parameters meet the preset conditions according to the current mode, i.e. the air conditioner is in a refrigeration mode and in a breezeless mode, or the air conditioner is in a refrigeration mode and in a breeze mode (the air out-flowing volume of the air conditioner in the breeze mode is relatively small).

Operation S200, adjusting an operating frequency of a compressor of the air conditioner according to the indoor humidity, in which the indoor humidity is proportional to the operating frequency.

In the present embodiment, the indoor humidity has a mapping relationship with the operating frequency of the compressor. The air conditioner can directly determine the value of adjustment for the operating frequency of the compressor according to the detected humidity and the mapping relationship, to ensure the compressor to operates according to the operating frequency. The cold air output by the compressor would change, leading to insufficient amount of the cold air for external water vapor (the content of the water vapor is related to the humidity) to condense into water droplets. Water condensation is thus prevented. The indoor humidity and the operating frequency of the compressor are in positive proportion to the mapping relationship.

When the indoor humidity is relatively high, it indicates that the indoor water vapor content is relatively high and condensation is easier to take place; when the indoor humidity is low, it indicates that the indoor water vapor content is relatively low and the air conditioner is not prone to condense. As such, when the air conditioner detects the indoor humidity, the air conditioner judges whether the indoor humidity is in the preset humidity range. If the indoor humidity is in the preset humidity range, it indicates that the indoor water vapor content is high and the operating frequency of the compressor needs to be controlled. That is, the air conditioner needs to execute the operation 5200. Of course, if the indoor humidity is not within the preset humidity range, then the indoor water vapor content is relatively low, and the air conditioner may not control the operating frequency of the compressor necessarily.

It should be noted that the refrigeration of the air conditioner changes the indoor humidity. When the detected humidity is less than the preset humidity, the current indoor water vapor content is relatively small, i.e. the operating frequency of the compressor does not need to be adjusted, i.e. the air conditioner stops adjusting the operating frequency of the compressor. In addition, the air conditioner can calculate the humidity ratio between the current humidity and the humidity detected for last time. When the humidity ratio is less than a preset threshold, the air conditioner stops adjusting the operating frequency of the compressor, and the preset threshold indicates that the current indoor humidity is less than the preset humidity.

According to the aforementioned technical solutions proposed in the present embodiment, the indoor humidity is detected in real time or regularly of a space where the air conditioner is located, when the air conditioner is in a refrigeration mode and an air out-flowing volume of the air conditioner is less than a preset air out-flowing volume, andthe operating frequency is adjusted of a compressor of the air conditioner according to the indoor humidity. As such, the compressor can reasonably adjust the operating frequency according to external humidity, to overcome a undeveloped refrigeration effect of the air conditioner due to water condensation under a small air volume, and ensure the refrigeration effect when the air out-flowing volume is relatively low.

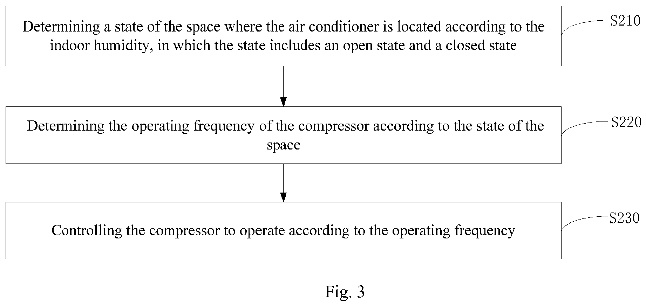

Referring to Fig. 3, which shows some other embodiments of the method for controlling an air conditioner of the present invention, based on the previous embodiments, the operation 5200 includes:
operation S210, determining a state of the space where the air conditioner is located according to the indoor humidity, in which the state includes an open state and a closed state;
operation S220, determining the operating frequency of the compressor according to the state of the space;
operation S230 controlling the compressor to operate according to the operating frequency.

In the present embodiment, the air conditioner can determine the state of the space in which the air conditioner is located, that is, the room state, according to the indoor humidity. In general, the indoor state includes an open state and a closed state. In the open state, water vapor exchanges between indoors and outdoors, reducing the indoor humidity changes, i.e. the adjustment range should be kept relatively stable for operating frequency of the compressor. While in the closed state, no water vapor exchanges between indoors and outdoors, so that the indoor humidity gradually decreases (the longer the refrigeration time of the air conditioner, the smaller the indoor humidity), and the adjustment range should further decrease for the operating frequency of the compressor. As such, the air conditioner sets different mapping relationships between the operating frequency of the compressor and the indoor humidity according to the state of the space. Then, the air conditioner can determine the current state of the space according to the change rate of the indoor humidity, thereby determining the operating frequency of the compressor, and finally controlling the compressor to operate at the determined operating frequency.

In the technical solution proposed in the present embodiments, the air conditioner determines the state of the space where the air conditioner is located according to the indoor humidity, and then determines the operating frequency of the compressor according to the state of the space, thereby controlling the compressor to operate according to the determined operating frequency. As such, the air conditioner can adopt corresponding measures to adjust the operating frequency of its compressor according to the state of the space, thus improving the control accuracy of the air conditioner.

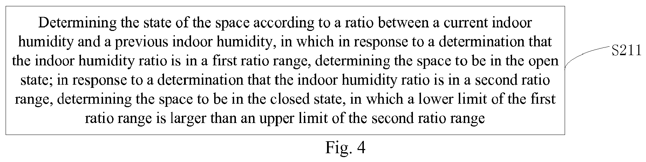

Referring to Fig. 4, which is a third embodiment of the method for controlling the air conditioner in the present invention, based on the second embodiment, the operation 210 includes:

Operation S211, determining the state of the space according to a ratio between a current indoor humidity and a previous indoor humidity, in which in response to a determination that the indoor humidity ratio is in a first ratio range, the space is determined to be in the open state; in response to a determination that the indoor humidity ratio is in a second ratio range, the space is determined to be in the closed state, in which the first ratio range is larger than the second ratio range.

In the present embodiment, the air conditioner can determine the state of the space where the air conditioner is located according to the indoor humidity. Specifically, the air conditioner calculates the humidity ratio between the currently detected indoor humidity and the previously detected indoor humidity. The air conditioner detects the indoor humidity in real time or at regular time intervals, that is, the detecting time interval of the set indoor humidity is preset in the air conditioner, and the humidity ratio can represent the decrease rate of the humidity of the space. The air conditioner sets two ratio ranges, respectively a first ratio range and a second ratio range, in which, the lower range of the first ratio range is larger than the upper range of the second ratio range. For example, the first ratio range can be 0.9-1, and the second ratio range can be 0.65-0.8. When the humidity ratio obtained by the air conditioner is in the first ratio range, the air conditioner determines that the decrease rate of indoor humidity is relatively small, and the air conditioner determines that the state of the space is open. When the humidity ratio obtained by the air conditioner is in the second ratio range, the air conditioner determines that the decrease rate of indoor humidity is relatively large, and the air conditioner determines that the state of the space is closed.

In the technical solution provided by the embodiment, the air conditioner determines the state of the space according to the humidity ratio of the currently detected indoor humidity to the previously detected indoor humidity, so that the air conditioner can adjust the operating frequency of the compressor according to the actual situation of the space, and the control accuracy of the air conditioner is improved.

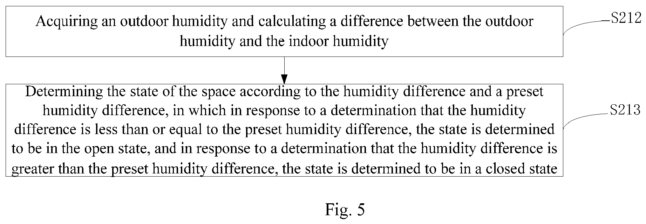

Referring to Fig. 5, which is a forth embodiment of the method for controlling the air conditioner in the present invention, based on the second embodiment, the operation 210 includes:
operation S212, acquiring an outdoor humidity and calculating a difference between the outdoor humidity and the indoor humidity;
operation S213, determining the state of the space according to the humidity difference and a preset humidity difference, in which in response to a determination that the humidity difference is less than or equal to the preset humidity difference, the state is determined to be in the open state, and in response to a determination that the humidity difference is greater than the preset humidity difference, the state is determined to be in a closed state.

In the present embodiment, the air conditioner judges the state of the space where the air conditioner is located according to the indoor humidity and the indoor humidity. Specifically, the air conditioner can obtain the current outdoor humidity, and the outdoor humidity can be obtained by networking the air conditioner or by a humidity sensor of an external machine of the air conditioner, which is not limited herein. When obtaining the outdoor humidity, the air conditioner calculates the humidity difference between the indoor humidity and the outdoor humidity. If the humidity difference is small (the humidity difference is less than or equal to the preset humidity difference, and the preset humidity difference can be any suitable value, such as 5%), then the outdoor humidity and the indoor humidity are not much different, that is, the space state is open. If the humidity difference is large (the humidity difference is greater than the preset humidity difference), the difference between indoor humidity and outdoor humidity is large. Namely, the air conditioner determines that the current state of the space is a closed state (the indoor humidity would gradually be lower as the cooling operation of the air conditioner lasts in the closed state space).

In the technical solution proposed by the present embodiment, the air conditioner calculates the humidity difference between the indoor humidity and the outdoor humidity, and determines the state of the space according to the humidity difference, so that the air conditioner can adjust the operating frequency of the compressor according to the practical situation of the space, and the control accuracy of the air conditioner is improved.

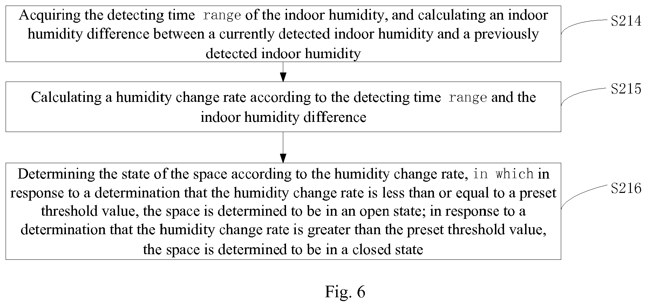

Referring to Fig. 6, which is a fifth embodiment of the method for controlling the air conditioner in the present invention, based on the second embodiment, the operation 210 includes:
operation S214, acquiring the detecting time interval of the indoor humidity, and calculating an indoor humidity difference between a currently detected indoor humidity and a previously detected indoor humidity;
operation S215, calculating a humidity change rate according to the detecting time interval and the indoor humidity difference;
operation S216, determining the state of the space according to the humidity change rate, in which in response to a determination that the humidity change rate is less than or equal to a preset threshold value, the space is determined to be in an open state; in response to a determination that the humidity change rate is greater than the preset threshold value, the space is determined to be in a closed state.

In the present embodiment, the air conditioner judges the state of the space where the air conditioner is located according to the indoor humidity. Specifically, the air conditioner calculates the indoor humidity difference between the current detected indoor humidity and the previously detected indoor humidity. And the detecting time interval is obtained of the indoor humidity, thereby determining the change rate of the indoor humidity according to the detecting time interval and the indoor humidity difference. When the space is in an open state, the water vapor exchange flows between indoor and outdoor, maintaining the indoor humidity stable, i.e. the indoor humidity change rate is small; when the space is in a closed state, the water vapor exchange little between indoor and outdoor, and the water vapor in the space gradually decreases as the refrigerating of the air conditioner goes on. The indoor humidity change rate is larger when the space is in a closed state. As such, the air conditioner judges whether the indoor humidity change rate is less than or equal to a preset threshold value after obtaining the indoor humidity change rate, and judges that the space is in an open state if the indoor humidity change rate is less than or equal to the preset threshold value; if it is greater than the preset threshold value, it is determined that the space is in a closed state.

In the technical solution proposed by the present embodiment, the air conditioner calculates the indoor humidity difference between the currently detected indoor humidity and the previously detected indoor humidity, thereby obtaining the indoor humidity change rate, and determining the state of the space according to the indoor humidity change rate, so that the air conditioner can adjust the operating frequency of the compressor according to the practical situation of the space, and the control accuracy of the air conditioner is improved.

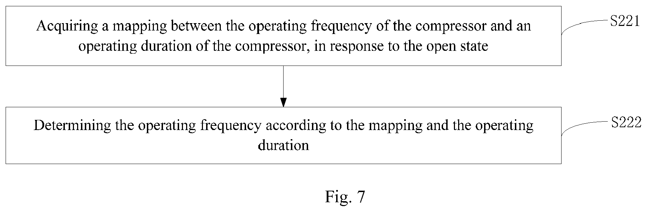

Referring to Fig. 7, which is a sixth embodiment of the method for controlling the air conditioner in the present invention, based on the second embodiment, the operation 210 includes:
operation S221, acquiring a mapping between the operating frequency of the compressor and an operating duration of the compressor, in response to the open state;
operation S222, determining the operating frequency according to the mapping and the operating duration.

In the present embodiment, the air conditioner determines the operating frequency of the compressor by a corresponding mapping relationship, when in the open space. Specifically, the air conditioner sets a mapping relationship between the operating frequency of the compressor and the operating duration of the compressor, and the operating frequency under the mapping relationship is inversely proportional to the operating duration, i.e., the longer the operating duration of the compressor, the smaller the operating frequency. Namely, the operating frequency of the compressor needs to be continuously reduced to avoid condensation phenomenon of the air conditioner, as the water vapor content in the room is relatively high. The air conditioner obtains the operating frequency according to the mapping relationship and the operating duration of the compressor, so that the compressor operates according to the operating frequency.

In the technical solution proposed by the present embodiment, when the air conditioner determines that the state of the space is an open state, the mapping relationship between the operating frequency of the compressor and the its operating duration is obtained, so that the corresponding operating frequency is determined according to the mapping relation. And the compressor operates according to the operating frequency, so that the adjustment of the operating frequency of the compressor is more reasonable, and the refrigeration effect of the air conditioner is ensured.

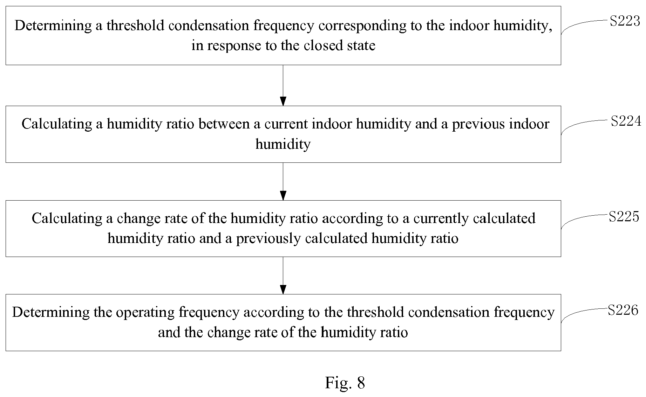

Referring to Fig. 8, which is a seventh embodiment of the method for controlling the air conditioner in the present invention, based on the second embodiment, the operation 210 includes:
operation S223, determining a threshold condensation frequency corresponding to the indoor humidity, in response to the closed state;
operation S224, calculating a humidity ratio between a current indoor humidity and a previous indoor humidity;
operation S225, calculating a change rate of the humidity ratio according to a currently calculated humidity ratio and a previously calculated humidity ratio;
operation S226, determining the operating frequency according to the threshold condensation frequency and the change rate of the humidity ratio.

In the present embodiment, the air conditioner uses the corresponding mapping relation to determine the operating frequency of the compressor, when in the open space. Specifically, the air conditioner sets the mapping relationship between the operating frequency of the compressor (adjustment value for the operating frequency) and the preset operating frequency, in which the operating frequency under the mapping relation is directly proportional to the condensing street frequency of the compressor. It should be noted that the condensation threshold frequency is the operating frequency that is qualified in the condensation test corresponding to the current humidity, that is, when the compressor is operating at the condensation threshold frequency, the amount of cold air output by the air conditioner will not condense into water drops with the water vapor corresponding to the current humidity. The condensation threshold frequency corresponding to the humidity is an empirical value.

The mapping relationship can be:
Fr=K^{∗}f0, where fr is the adjustment value for operating frequency, k is the coefficient, and f0 is the preset operating frequency corresponding to the current humidity.

It should be noted that K (K may range from 1.1 to 1.5) varies, and the variation of K depends on the decrease rate of the humidity ratio. The faster the decrease rate of the humidity ratio, the larger the K value. That is, the larger the change rate of humidity ratio between the currently detected humidity ratio and the previously detected humidity ratio, the larger the K value. As such, when the air conditioner obtains the current indoor humidity, it determines the threshold condensation frequency according to the indoor humidity, then calculates the change rate of humidity ratio according to the humidity ratio and the humidity ratio calculated for the previous time (when the air conditioner detects the indoor humidity each time, it calculates the humidity ratio according to the current detected indoor humidity and the previously detected indoor humidity, and stores the humidity ratio, so that the air conditioner has the current calculated humidity ratio and the humidity ratio calculated for the previous time). The air conditioner determines the K value according to the change rate of the humidity ratio , and finally determines the operating frequency of the compressor according to the K value and the threshold condensation frequency.

In the technical solution proposed by the present embodiment, when the air conditioner determines that the state of the space is a closed state, the change rate of humidity ratio is calculated according to the indoor humidity, and the threshold condensation frequency corresponding to the current indoor humidity is obtained. The operating frequency of the compressor is determined according to the threshold condensation frequency and the change rate of the humidity ratio, so that the compressor may operate according to the determined operating frequency. The adjustment of the operating frequency of the compressor is more reasonable, and the refrigeration effect of the air conditioner is ensured.

The present invention further proposes an air conditioner, which includes a processor, a memory, and a control program of the air conditioner stored on the memory and executable on the processor, and when executed by the processor, the control program of the air conditioner implements the operations of the control method for the air conditioner described in above embodiments.

The present invention further proposes a computer readable storage medium which stores a program for controlling an air conditionerand when the control program of the air conditioner is executed by a processor, the control program implements operations of the control method for the air conditioner as described in above embodiments.

The aforementioned serial numbers regarding the embodiments of the present application are for description only and do not represent the superiority and inferiority of the embodiments.

It should be noted that in this document, the terms "comprising" "including" or any other variation thereof are intended to cover a non-exclusive inclusion, such that a process, method, article, or device that includes a list of elements includes not only those elements but further other elements not expressly listed, or elements inherent to such process, method, article, or device. Without further restrictions, an element defined by the statement " includes an" does not exclude the presence of another identical element in a process, method, article, or device including the element.

From the above description of the embodiments, those skilled in the art can clearly understand that the method of the above embodiments can be implemented by means of software plus necessary general-purpose hardware platforms. Of course, it can further be implemented by means of hardware, but in many cases the former is a better embodiment. Based on this understanding, the technical solution of the present application, in essence, or the part contributing to the prior art, can be embodied in the form of a software product stored in a storage medium (such as ROM/RAM, magnetic disk, diskette) as described above, including several instructions to cause a terminal device (which can be a mobile phone, computer, server, air conditioner, or network device, etc.) to perform the methods described in various embodiments of the present application.

## Claims

1. A method for controlling an air conditioner, wherein the method comprises the following operations:
real-time or regularly detecting (S100) an indoor humidity of a space where the air conditioner is located, in response to a determination that the air conditioner is in a cooling mode and an air out-flowing volume of the air conditioner is less than a preset air out-flowing volume; and
adjusting (S200) an operating frequency of a compressor according to the indoor humidity, wherein the indoor humidity is proportional to the operating frequency,
**characterized in that**
the operation of "adjusting (S200) an operating frequency of a compressor according to the indoor humidity", comprises:
determining (S210) a state of the space where the air conditioner is located according to the indoor humidity, wherein the state comprises an open state and a closed state;
determining (S220) the operating frequency of the compressor according to the state of the space; and
controlling (5230) the compressor to operate according to the operating frequency.

2. The method according to claim 1, **characterized in that** the operation of "determining a state of the space where the air conditioner is located according to the indoor humidity", comprises:
determining (S211) the state of the space according to a ratio between a current indoor humidity and a previous indoor humidity, wherein
in response to a determination that the indoor humidity ratio is in a first ratio range, determining the space to be in the open state; and
in response to a determination that the indoor humidity ratio is in a second ratio range, determining the space to be in the closed state, wherein a lower limit of the first ratio range is larger than an upper limit of the second ratio range.

3. The method according to any one of claims 1 or 2, **characterized in that** the operation of "determining the operating frequency of the compressor according to the state of the space", comprises:
acquiring (S221) a mapping between the operating frequency of the compressor and an operating duration of the compressor, in response to a determination that the space is in the open state; and
determining (S222) the operating frequency according to the mapping and the operating duration.

4. The method according to any one of claims 1 to 3, **characterized in that**, the operating frequency of the compressor is inversely proportional to the operating duration of the compressor, in response to the determination that the space is in the open state.

5. The method according to any one of claims 1 to 4, **characterized in that** the operation of "determining (220) the operating frequency of the compressor according to the state of the space", comprises:
determining (S223) a threshold condensation frequency corresponding to the indoor humidity, in response to a determination that the space is in the closed state;
calculating (S224) a humidity ratio between a current indoor humidity and a previous indoor humidity;
calculating (S225) a change rate of the humidity ratio according to a currently calculated humidity ratio and a previously calculated humidity ratio; and
determining (S226) the operating frequency according to the threshold condensation frequency and the change rate of the humidity ratio.

6. The method according to any one of claims 1 to 5, **characterized in that** the operation of "determining (S210) a state of the space where the air conditioner is located according to the indoor humidity", comprises:
acquiring (S212) an outdoor humidity and calculating a humidity difference between the outdoor humidity and the indoor humidity;
determining (S213) the state of the space according to the humidity difference and a preset humidity difference, wherein
in response to a determination that the humidity difference is less than or equal to the preset humidity difference, determining the state to be in the open state, and
in response to a determination that the humidity difference is greater than the preset humidity difference, determining the state to be in a closed state.

7. The method according to any one of claims 1 to 6, **characterized in that** the operation of "determining (S210) a state of the space where the air conditioner is located according to the indoor humidity", comprises:
acquiring (S214) a detecting time interval of the indoor humidity, and calculating an indoor humidity difference between a currently detected indoor humidity and a previously detected indoor humidity;
calculating (S215) a humidity change rate according to the detecting time interval and the indoor humidity difference; and
determining (S216) the state of the space according to the humidity change rate, wherein
in response to a determination that the humidity change rate is less than or equal to a preset threshold value, determining the space to be in an open state; and
in response to a determination that the humidity change rate is greater than the preset threshold value, determining the space to be in a closed state.

8. The method according to any one of claims 1 to 7, **characterized in that** after the operation of "detecting (S100) an indoor humidity", the method further comprises:
judging whether the indoor humidity is within a preset humidity range; and
in response to a determination that the indoor humidity is within the preset humidity range, executing the operation of "adjusting (S200) an operating frequency of a compressor according to the indoor humidity".

9. The method according to any one of claims 1 to 8, **characterized in that** after the operation of "detecting (S100) an indoor humidity", the method further comprises:
judging whether the indoor humidity is less than a preset humidity; and
in response to a determination that the indoor humidity is larger or equal to the preset humidity, executing the operation of "adjusting (S200) an operating frequency of a compressor according to the indoor humidity".

10. The method according to any one of claims 1 to 9, **characterized in that** the method further comprises:
in response to a determination that an air out-flowing temperature of the air conditioner is less than a preset air out-flowing temperature, and an air out-flowing volume of the air conditioner is less than a preset air out-flowing volume, executing the operation of "real-time or regularly detecting (S100) an indoor humidity of a space where the air conditioner is located".

11. The method according to any one of claims 1 to 10, **characterized in that** the method further comprises:
in response to a determination that the air conditioner is in the cooling mode and in a breezeless mode, executing the operation of "real-time or regularly detecting (S100) an indoor humidity of a space where the air conditioner is located".

12. The method according to any one of claims 1 to 11, **characterized in that** the method further comprises:
in response to a determination that the air conditioner is in the cooling mode and in a breeze mode, executing the operation of "real-time or regularly detecting (S100) an indoor humidity of a space where the air conditioner is located".

13. An air conditioner, **characterized in that** the air conditioner comprises a processor (1001), a memory (1002), and a program for controlling the air conditioner stored on the memory (1002) and executable on the processor (1001), wherein the program of the air conditioner, when executed by the processor (1001), implements the operations of a method for controlling the air conditioner according to any one of claims 1 to 12.

14. A computer readable storage medium, **characterized in that** the computer readable storage medium stores a program for controlling an air conditioner, wherein the program, when executed by a processor, implements operations of a method for controlling the air conditioner according to any one of claims 1 to 12.

## Patentansprüche

1. Verfahren zum Steuern einer Klimaanlage, wobei das Verfahren die folgenden Operationen umfasst:
Echtzeit- oder regelmäßiges Erfassen (S100) einer Innenraumfeuchtigkeit eines Raums, in dem sich die Klimaanlage befindet, als Reaktion auf eine Bestimmung, dass sich die Klimaanlage in einem Kühlmodus befindet und ein Luftausströmungsvolumen der Klimaanlage kleiner als ein voreingestelltes Luftausströmungsvolumen ist; und
Einstellen (S200) einer Betriebsfrequenz eines Kompressors gemäß der Innenraumfeuchtigkeit, wobei die Innenraumfeuchtigkeit proportional zu der Betriebsfrequenz ist,
**dadurch gekennzeichnet, dass**
der Vorgang des "Einstellens (S200) einer Betriebsfrequenz eines Kompressors gemäß der Innenraumfeuchtigkeit" Folgendes umfasst:
Bestimmen (S210) eines Zustands des Raums, in dem sich die Klimaanlage gemäß der Innenraumfeuchtigkeit befindet, wobei der Zustand einen offenen Zustand und einen geschlossenen Zustand umfasst;
Bestimmen (S220) der Betriebsfrequenz des Kompressors gemäß dem Zustand des Raums; und
Steuern (S230) des Kompressors, um gemäß der Betriebsfrequenz zu arbeiten.

2. Verfahren gemäß Anspruch 1, **dadurch gekennzeichnet, dass** der Vorgang des "Bestimmens eines Zustands des Raums, in dem sich die Klimaanlage gemäß der Innenraumfeuchtigkeit befindet", Folgendes umfasst:
Bestimmen (S211) des Zustands des Raums gemäß einem Verhältnis zwischen einer aktuellen Innenraumfeuchtigkeit und einer vorherigen Innenraumfeuchtigkeit, wobei als Reaktion auf eine Bestimmung, dass das Innenraumfeuchtigkeitsverhältnis in einem ersten Verhältnisbereich liegt, Bestimmen, dass der Raum im offenen Zustand ist; und
als Reaktion auf eine Bestimmung, dass das Innenraumfeuchtigkeitsverhältnis in einem zweiten Verhältnisbereich liegt, Bestimmen, dass der Raums im geschlossenen Zustand ist, wobei eine untere Grenze des ersten Verhältnisbereichs größer als eine obere Grenze des zweiten Verhältnisbereichs ist.

3. Verfahren gemäß einem der Ansprüche 1 oder 2, **dadurch gekennzeichnet, dass** der Vorgang des "Bestimmens der Betriebsfrequenz des Kompressors gemäß dem Zustand des Raums" Folgendes umfasst:
Erlangen (S221) einer Abbildung zwischen der Betriebsfrequenz des Kompressors und einer Betriebsdauer des Kompressors als Reaktion auf eine Bestimmung, dass der Raum in dem offenen Zustand ist; und
Bestimmen (S222) der Betriebsfrequenz gemäß der Abbildung und der Betriebsdauer.

4. Verfahren gemäß einem der Ansprüche 1 bis 3, **dadurch gekennzeichnet, dass** die Betriebsfrequenz des Kompressors umgekehrt proportional zu der Betriebsdauer des Kompressors ist, als Reaktion auf die Bestimmung, dass der Raum in dem offenen Zustand ist.

5. Verfahren gemäß einem der Ansprüche 1 bis 4, **dadurch gekennzeichnet, dass** der Vorgang des "Bestimmens (S220) der Betriebsfrequenz des Kompressors gemäß dem Zustand des Raums" Folgendes umfasst:
Bestimmen (S223) einer Schwellenkondensationsfrequenz entsprechend der Innenraumfeuchtigkeit als Reaktion auf eine Bestimmung, dass sich der Raum in dem geschlossenen Zustand befindet;
Berechnen (S224) eines Feuchtigkeitsverhältnisses zwischen einer aktuellen Innenraumfeuchtigkeit und einer vorherigen Innenraumfeuchtigkeit;
Berechnen (S225) einer Änderungsrate des Feuchtigkeitsverhältnisses gemäß einem aktuell berechneten Feuchtigkeitsverhältnis und einem zuvor berechneten Feuchtigkeitsverhältnis; und
Bestimmen (S226) der Betriebsfrequenz gemäß der Schwellenkondensationsfrequenz und der Änderungsrate des Feuchtigkeitsverhältnisses.

6. Verfahren gemäß einem der Ansprüche 1 bis 5, **dadurch gekennzeichnet, dass** der Vorgang des "Bestimmens (S210) eines Zustands des Raums, in dem sich die Klimaanlage gemäß der Innenraumfeuchtigkeit befindet", Folgendes umfasst:
Erlangen (S212) einer Außenfeuchtigkeit und Berechnen einer Feuchtigkeitsdifferenz zwischen der Außenfeuchtigkeit und der Innenraumfeuchtigkeit;
Bestimmen (S213) des Zustands des Raums gemäß der Feuchtigkeitsdifferenz und einer voreingestellten Feuchtigkeitsdifferenz, wobei
als Reaktion auf eine Bestimmung, dass die Feuchtigkeitsdifferenz kleiner oder gleich der voreingestellten Feuchtigkeitsdifferenz ist, Bestimmung, dass sich der Zustand im offenen Zustand befindet, und
als Reaktion auf eine Bestimmung, dass die Feuchtigkeitsdifferenz größer als die voreingestellte Feuchtigkeitsdifferenz ist, Bestimmung, dass sich der Zustand in einem geschlossenen Zustand befindet.

7. Verfahren gemäß einem der Ansprüche 1 bis 6, **dadurch gekennzeichnet, dass** der Vorgang des "Bestimmens (S210) eines Zustands des Raums, in dem sich die Klimaanlage gemäß der Innenraumfeuchtigkeit befindet", Folgendes umfasst:
Erlangen (S214) eines Erfassungszeitintervalls der Innenraumfeuchtigkeit und Berechnen einer Innenraumfeuchtigkeitsdifferenz zwischen einer aktuell erfassten Innenraumfeuchtigkeit und einer zuvor erfassten Innenraumfeuchtigkeit;
Berechnen (S215) einer Feuchtigkeitsänderungsrate gemäß dem Erfassungszeitintervall und der Innenraumfeuchtigkeitsdifferenz; und
Bestimmen (S216) des Zustands des Raums gemäß der Feuchtigkeitsänderungsrate, wobei
als Reaktion auf eine Bestimmung, dass die Feuchtigkeitsänderungsrate kleiner oder gleich einem voreingestellten Schwellenwert ist, Bestimmen, dass sich der Raum in einem offenen Zustand befindet; und
als Reaktion auf eine Bestimmung, dass die Feuchtigkeitsänderungsrate größer als der voreingestellte Schwellenwert ist, Bestimmen, dass sich der Raum in einem geschlossenen Zustand befindet.

8. Verfahren gemäß einem der Ansprüche 1 bis 7, **dadurch gekennzeichnet, dass** das Verfahren nach dem Vorgang des "Erfassens (S100) einer Innenraumfeuchtigkeit" ferner Folgendes umfasst:
Beurteilen, ob die Innenraumfeuchtigkeit innerhalb eines voreingestellten Feuchtigkeitsbereichs liegt; und
als Reaktion auf eine Bestimmung, dass die Innenraumfeuchtigkeit innerhalb des voreingestellten Feuchtigkeitsbereichs liegt, Ausführen des Vorgangs "Einstellen (S200) einer Betriebsfrequenz eines Kompressors gemäß der Innenraumfeuchtigkeit".

9. Verfahren gemäß einem der Ansprüche 1 bis 8, **dadurch gekennzeichnet, dass** das Verfahren nach dem Vorgang des "Erfassens (S100) einer Innenraumfeuchtigkeit" ferner Folgendes umfasst:
Beurteilen, ob die Innenraumfeuchtigkeit kleiner als eine voreingestellte Feuchtigkeit ist; und
als Reaktion auf eine Bestimmung, dass die Innenraumfeuchtigkeit größer oder gleich der voreingestellten Feuchtigkeit ist, Ausführen des Vorgangs des "Einstellens (S200) einer Betriebsfrequenz eines Kompressors gemäß der Innenraumfeuchtigkeit".

10. Verfahren gemäß einem der Ansprüche 1 bis 9, **dadurch gekennzeichnet, dass** das Verfahren ferner Folgendes umfasst:
als Reaktion auf eine Bestimmung, dass eine Luftausströmungstemperatur der Klimaanlage kleiner als eine voreingestellte Luftausströmungstemperatur ist, und ein Luftausströmungsvolumen der Klimaanlage kleiner als ein voreingestelltes Luftausströmungsvolumen ist, Ausführen des Vorgangs des "Echtzeit- oder regelmäßigen Erfassens (S100) einer Innenraumfeuchtigkeit eines Raums, in dem sich die Klimaanlage befindet".

11. Verfahren gemäß einem der Ansprüche 1 bis 10, **dadurch gekennzeichnet, dass** das Verfahren ferner Folgendes umfasst:
als Reaktion auf eine Bestimmung, dass sich die Klimaanlage im Kühlmodus und in einem windstillen Modus befindet, Ausführen des Vorgangs des "Echtzeit- oder regelmäßigen Erfassens (S100) einer Innenraumfeuchtigkeit eines Raums, in dem sich die Klimaanlage befindet".

12. Verfahren gemäß einem der Ansprüche 1 bis 11, **dadurch gekennzeichnet, dass** das Verfahren ferner Folgendes umfasst:
als Reaktion auf eine Bestimmung, dass sich die Klimaanlage im Kühlmodus und in einem Brisenmodus befindet, Ausführen des Vorgangs des "Echtzeit- oder regelmäßigen Erfassens (S100) einer Innenraumfeuchtigkeit eines Raums, in dem sich die Klimaanlage befindet".

13. Klimaanlage, **dadurch gekennzeichnet, dass** die Klimaanlage einen Prozessor (1001), einen Speicher (1002) und ein Programm zum Steuern der Klimaanlage umfasst, das auf dem Speicher (1002) gespeichert und auf dem Prozessor (1001) ausführbar ist, wobei das Programm der Klimaanlage, wenn es von dem Prozessor (1001) ausgeführt wird, die Vorgänge eines Verfahrens zum Steuern der Klimaanlage gemäß einem der Ansprüche 1 bis 12 implementiert.

14. Computerlesbares Speichermedium, **dadurch gekennzeichnet, dass** das computerlesbare Speichermedium ein Programm zum Steuern einer Klimaanlage speichert, wobei das Programm, wenn es von einem Prozessor ausgeführt wird, Vorgänge eines Verfahrens zum Steuern der Klimaanlage gemäß einem der Ansprüche 1 bis 12 implementiert.

## Revendications

1. Procédé de commande d'une climatisation, le procédé comprenant les étapes suivantes :
détection en temps réel ou régulière (S100) de l'humidité intérieure d'un espace où se trouve la climatisation, en réponse à une détermination que la climatisation est dans un mode refroidissement et qu'un volume de sortie d'air de la climatisation est inférieur à un volume de sortie d'air prédéfini ; et
le réglage (S200) d'une fréquence de fonctionnement d'un compresseur en fonction de l'humidité intérieure, l'humidité intérieure étant proportionnelle à la fréquence de fonctionnement,
**caractérisé en ce que**
l'étape de « réglage (S200) d'une fréquence de fonctionnement d'un compresseur en fonction de l'humidité intérieure » comprend :
la détermination (S210) d'un état de l'espace où se trouve la climatisation en fonction de l'humidité intérieure, l'état comprenant un état ouvert et un état fermé ;
la détermination (S220) de la fréquence de fonctionnement du compresseur en fonction de l'état de l'espace ; et
le commande (S230) du compresseur pour le faire fonctionner selon la fréquence de fonctionnement.

2. Procédé selon la revendication 1, **caractérisé en ce que** l'étape de « détermination d'un état de l'espace où se trouve la climatisation en fonction de l'humidité intérieure » comprend :
la détermination (S211) de l'état de l'espace en fonction d'un rapport entre une humidité intérieure actuelle et une humidité intérieure précédente, dans lequel en réponse à la détermination que le rapport d'humidité intérieure est compris dans une première plage de rapport, il est déterminé que l'espace est dans l'état ouvert ; et
en réponse à une détermination que le rapport d'humidité intérieure est compris dans la deuxième plage de rapport, il est déterminé que l'espace est dans l'état fermé, dans lequel une limite inférieure de la première plage de rapport est plus élevée qu'une limite supérieure de la deuxième plage de rapport.

3. Procédé selon l'une quelconque des revendications 1 ou 2, **caractérisé en ce que** l'étape de « détermination de la fréquence de fonctionnement du compresseur en fonction de l'état de l'espace » comprend :
l'acquisition (S221) d'une mise en correspondance entre la fréquence de fonctionnement du compresseur et une durée de fonctionnement du compresseur, en réponse à une détermination que l'espace est dans l'état ouvert ; et
la détermination (S222) de la fréquence de fonctionnement en fonction de la mise en correspondance et de la durée de fonctionnement.

4. Procédé selon l'une quelconque des revendications 1 à 3, **caractérisé en ce que** la fréquence de fonctionnement du compresseur est inversement proportionnelle à la durée de fonctionnement du compresseur, en réponse à la détermination que l'espace est dans l'état ouvert.

5. Procédé selon l'une quelconque des revendications 1 à 4, **caractérisé en ce que** l'étape de « détermination (220) de la fréquence de fonctionnement du compresseur en fonction de l'état de l'espace » comprend :
la détermination (S223) d'une fréquence de condensation seuil correspondant à l'humidité intérieure, en réponse à une détermination que l'espace est dans l'état fermé ;
le calcul (S224) d'un rapport d'humidité entre une humidité intérieure actuelle et une humidité intérieure précédente ;
le calcul (S225) d'un taux de variation du rapport d'humidité en fonction d'un rapport d'humidité actuellement calculé et d'un rapport d'humidité calculé précédemment ; et
la détermination (S226) de la fréquence de fonctionnement en fonction de la fréquence de condensation seuil et du taux de variation du rapport d'humidité.

6. Procédé selon l'une quelconque des revendications 1 à 5, **caractérisé en ce que** l'étape de « détermination (S210) d'un état de l'espace où se trouve la climatisation en fonction de l'humidité intérieure » comprend :
l'acquisition (S212) d'une humidité extérieure et le calcul d'une différence d'humidité entre l'humidité extérieure et l'humidité intérieure ;
la détermination (S213) de l'état de l'espace en fonction de la différence d'humidité et d'une différence d'humidité prédéfinie, dans lequel en réponse à une détermination que la différence d'humidité est inférieure ou égale à la différence d'humidité prédéfinie, il est déterminé que l'état est dans l'état ouvert, et
en réponse à une détermination de la différence d'humidité est supérieure à la différence d'humidité prédéfinie, il est déterminé que l'état est dans un état fermé.

7. Procédé selon l'une quelconque des revendications 1 à 6, **caractérisé en ce que** l'étape de « détermination (S210) d'un état de l'espace où se trouve la climatisation en fonction de l'humidité intérieure » comprend :
l'acquisition (S214) d'un intervalle de temps de détection de l'humidité intérieure, et le calcul d'une différence d'humidité intérieure entre une humidité intérieure détectée actuellement et une humidité intérieure détectée précédemment ;
le calcul (S215) d'un taux de variation de l'humidité en fonction de l'intervalle de temps de détection et de la différence d'humidité intérieure ; et
la détermination (S216) de l'état de l'espace en fonction du taux de variation de l'humidité, dans lequel
en réponse à une détermination que le taux de variation de l'humidité est inférieur ou égal à une valeur seuil prédéfinie, il est déterminé que l'état est dans un état ouvert ; et
en réponse à une détermination que la vitesse de changement de l'humidité est supérieure à la valeur seuil prédéfinie, il est déterminé que l'espace est dans un état fermé.

8. Procédé selon l'une quelconque des revendications 1 à 7, **caractérisé en ce qu'**après l'étape de « détection (S100) d'une humidité intérieure », le procédé comprend en outre :
l'évaluation de l'inclusion de l'humidité intérieure dans une plage d'humidité prédéfinie ; et
en réponse à une détermination que l'humidité intérieure est incluse dans la plage d'humidité prédéfinie, l'étape de « réglage (S200) d'une fréquence de fonctionnement d'un compresseur en fonction de l'humidité intérieure » est exécutée.

9. Procédé selon l'une quelconque des revendications 1 à 8, **caractérisé en ce qu'**après l'étape de « détection (S100) d'une humidité intérieure », le procédé comprend en outre :
l'évaluation du niveau de l'humidité intérieure en dessous d'une humidité prédéfinie ; et
en réponse à une détermination que l'humidité intérieure est supérieure ou égale à l'humidité prédéfinie, l'étape de « réglage (S200) d'une fréquence de fonctionnement d'un compresseur en fonction de l'humidité intérieure » est exécutée.

10. Procédé selon l'une quelconque des revendications 1 à 9, **caractérisé en ce que** le procédé comprend en outre :
en réponse à une détermination qu'une température de sortie d'air de la climatisation est inférieure à une température de sortie d'air prédéfinie, et qu'un volume de sortie d'air de la climatisation est inférieur à un volume de sortie d'air prédéfini, l'étape de « détection en temps réel ou régulière (S100) d'une humidité intérieure d'un espace où se trouve la climatisation » est exécutée.

11. Procédé selon l'une quelconque des revendications 1 à 10, **caractérisé en ce que** le procédé comprend en outre :
en réponse à une détermination que la climatisation est dans le mode refroidissement et dans un mode sans souffle, l'étape de détection en temps réel ou régulière (S100) d'une humidité intérieure d'un espace où se trouve la climatisation » est exécutée.

12. Procédé selon l'une quelconque des revendications 1 à 11, **caractérisé en ce que** le procédé comprend en outre :
en réponse à une détermination que la climatisation est dans le mode refroidissement et dans un mode avec souffle, l'étape de « détection en temps réel ou régulière (S100) d'une humidité intérieure d'un espace où se trouve la climatisation » est exécutée.

13. Climatisation, **caractérisée en ce que** la climatisation comprend un processeur (1001), une mémoire (1002), et un programme de commande de la climatisation stocké dans la mémoire (1002) et exécutable sur le processeur (1001), dans laquelle le programme de la climatisation, lorsqu'il est exécuté par le processeur (1001), met en oeuvre les étapes d'un procédé de commande de la climatisation selon l'une quelconque des revendications 1 à 12.

14. Support de stockage lisible par ordinateur, **caractérisé en ce que** le support de stockage lisible par ordinateur stocke un programme de commande d'une climatisation, dans lequel le programme, lorsqu'il est exécuté par un processeur, met en oeuvre des étapes d'un procédé de commande de la climatisation selon l'une quelconque des revendications 1 à 12.
